# DEMANDE DE BREVET EUROPEEN

(11) **EP 4 177 111 A1**
(43) Date de publication de la demande: **10.05.2023**
(21) Numéro de dépôt: 22201678.4
(22) Date de dépôt: 14.10.2022
(51) Int. Cl.: B60R 7/04, B60R 11/00

(54) **DISPOSITIF DE RANGEMENT POUR UN VÉHICULE**

(30) Priorité: 09.11.2021 FR 2111906
(71) Demandeur: Renault s.a.s, 92100 Boulogne Billancourt (FR)
(72) Inventeur: BEZEAULT, Loic, 78280 GUYANCOURTFR (FR); DUCHENE, Vincent, 78280 GUYANCOURT (FR)

(57) **Abrégé**

Dispositif de rangement (50) pour véhicule automobile, comprenant une console de rangement (2), notamment une console de rangement centrale, caractérisé en ce qu'il comprend un module d'extension (30) agencé à l'arrière de la console de rangement (2), monté mobile relativement à la console de rangement (2), notamment mobile en translation, entre une position rangée et une position étendue, et en ce que le module d'extension (30) comprend un corps (31) et une tablette (61) agencée sur le corps (31) de manière mobile relativement au corps (31).

## Description

L'invention concerne un dispositif de rangement pour un véhicule automobile. L'invention porte aussi sur un véhicule, notamment un véhicule automobile, comprenant un tel dispositif de rangement.

Dans un véhicule automobile, il apparaît important de prévoir, pour les passagers arrière, des supports et des zones de rangement pour des objets divers. Il apparaît également important de prévoir un système de ventilation pour les passagers arrière.

On connaît des dispositifs de type poches ou aumônières destinés à être utilisés par des passagers assis sur les sièges arrière d'un véhicule pour le rangement d'objets divers. De telles poches ou aumônières sont par exemple agencées à l'arrière des sièges avant. Toutefois, ces solutions présentent des inconvénients, en réduisant l'espace dédié aux genoux des passagers arrière et offrent un volume de rangement limité.

On connaît également des consoles centrales disposées dans l'habitacle entre le siège du conducteur et le siège du passager avant, munies d'un tiroir pour le rangement d'objets divers. Toutefois, ces solutions présentent des inconvénients. En particulier, l'accoudoir recouvrant la console présente un encombrement élevé dans l'habitacle devant les sièges des passagers arrière.

Le but de l'invention est de fournir un système de rangement et de support remédiant aux inconvénients ci-dessus et améliorant les dispositifs connus de l'art antérieur. En particulier, l'invention permet de réaliser un système de rangement et de support et un procédé d'utilisation d'un tel système qui soient simples, robustes et fiables et qui permettent une optimisation du volume de rangement et de la surface de support tout en offrant une pluralité de fonctionnalités.

L'invention concerne un dispositif de rangement pour véhicule automobile, comprenant une console de rangement, notamment une console de rangement centrale, comprenant un module d'extension agencé à l'arrière de la console de rangement, monté mobile relativement à la console de rangement, notamment mobile en translation, entre une position rangée et une position étendue, et le module d'extension comprenant un corps et une tablette agencée sur le corps de manière mobile relativement au corps.

Le corps du module d'extension peut comprendre au moins une paroi latérale et une paroi supérieure, de sorte que dans la position rangée, le corps du module d'extension entoure au moins partiellement la console de rangement.

La console de rangement peut comprendre un accoudoir fixé sur la partie avant de la console de rangement, une partie arrière de l'accoudoir se trouvant à distance de la partie arrière de la console de rangement pour libérer un espace, de sorte que la paroi supérieure du module d'extension est positionnée au moins partiellement sous l'accoudoir dans la position rangée du module d'extension.

La console de rangement peut comprendre un bac de rangement positionné en position supérieure de la partie arrière de la console de rangement.

La au moins une paroi latérale du module d'extension peut être positionnée au moins partiellement en vis-à-vis d'une paroi de la console de rangement dans la position rangée du module d'extension.

La tablette peut être pliable, apte à passer d'une configuration pliée à une configuration dépliée, la tablette comprenant notamment un premier volet et un deuxième volet apte à pivoter entre une position rabattue sur le premier volet et une position déployée.

La tablette peut être montée mobile en rotation autour d'un axe vertical ou sensiblement vertical relativement au corps du module d'extension.

Le module d'extension peut comprendre un support mobile en translation relativement au corps du module d'extension.

La tablette peut être montée mobile sur ledit support, notamment mobile en rotation.

Le dispositif de rangement peut comprendre un premier moyen de verrouillage et de déverrouillage, comprenant notamment un système de câble et/ou un premier moyen de préhension comprenant notamment une poignée et/ou un moyen de freinage comprenant notamment une biellette de frein, pour verrouiller/déverrouiller la position du module d'extension relativement à la console de rangement.

La console de rangement peut comprendre un moyen d'aération disposé à l'extrémité arrière supérieure de la partie arrière de la console de rangement.

L'invention concerne également un véhicule, notamment véhicule automobile, comprenant un dispositif de rangement défini précédemment.

La console de rangement peut être une console agencée en partie centrale du véhicule, entre deux sièges avant du véhicule.

Le module d'extension peut être mobile en translation par coulissement par l'intermédiaire d'au moins un rail agencé entre les sièges avant et les sièges arrière du véhicule, à l'arrière de la console de rangement.

Les dessins annexés représentent, à titre d'exemple, un mode de réalisation d'un dispositif selon l'invention et un mode d'exécution d'un procédé selon l'invention.
La figure 1 représente un mode de réalisation d'un ensemble comprenant une console.
La figure 2 représente un mode de réalisation d'un ensemble comprenant une console.
La figure 3 représente un mode de réalisation d'un ensemble comprenant une console, un module d'extension et un dispositif de rangement.
La figure 4 représente un mode de réalisation d'un ensemble comprenant une console, un module d'extension et un dispositif de rangement.
La figure 5 est une vue en perspective représentant un mode de réalisation d'un module d'extension et d'un dispositif de rangement comprenant un support et une tablette.
La figure 6 est une vue en perspective éclatée représentant un mode de réalisation d'un module d'extension et d'un dispositif de rangement comprenant un support et une tablette.
La figure 7 représente un mode de réalisation d'un rail d'un module d'extension.
La figure 8 représente un mode de réalisation d'une partie d'un rail d'un module d'extension.
La figure 9 représente un mode de réalisation d'un moyen de liaison et d'un premier moyen de verrouillage et de déverrouillage d'un module d'extension.
La figure 10 est une vue de dessous représentant de façon partielle un mode de réalisation d'un dispositif de rangement.

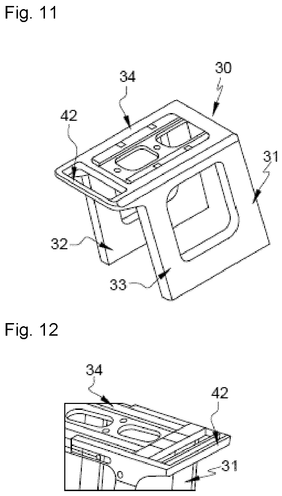

La figure 11 est une vue en perspective représentant un mode de réalisation d'un module d'extension.
La figure 12 est une vue en perspective représentant de façon partielle un mode de réalisation d'un module d'extension, notamment une poignée d'un module d'extension.
La figure 13 est une vue en perspective éclatée représentant un mode de réalisation d'un module d'extension sans habillages intérieurs et extérieurs.
La figure 14 est une vue en perspective éclatée représentant un mode de réalisation d'un module d'extension avec des habillages intérieurs et extérieurs.
La figure 15 est une vue en perspective représentant un mode de réalisation d'un support d'un dispositif de rangement.
La figure 16 est une vue en perspective éclatée représentant un mode de réalisation d'un support d'un dispositif de rangement.
La figure 17 représente un mode de réalisation d'un deuxième moyen de verrouillage et de déverrouillage et d'un moyen de sécurisation d'un dispositif de rangement.
La figure 18 est une vue en perspective représentant un mode de réalisation d'une tablette d'un dispositif de rangement.
La figure 19 est une vue en perspective éclatée représentant un mode de réalisation d'une tablette d'un dispositif de rangement.
La figure 20 est une vue en coupe représentant un mode de réalisation d'une tablette d'un dispositif de rangement.
La figure 21 est une vue latérale du côté droit représentant un mode de réalisation d'un ensemble comprenant une console, un module d'extension et un dispositif de rangement, le module d'extension étant en position rangée et le support étant dans la première position.
La figure 22 est une vue latérale du côté droit représentant un mode de réalisation d'un ensemble comprenant une console, un module d'extension et un dispositif de rangement, le module d'extension étant en position étendue et le support étant dans la première position.
La figure 23 est une vue latérale du côté droit représentant un mode de réalisation d'un ensemble comprenant une console, un module d'extension et un dispositif de rangement, le module d'extension étant en position étendue et le support étant dans la deuxième position.
La figure 24 est une vue en perspective représentant de façon partielle un mode de réalisation d'un ensemble comprenant une console, un module d'extension et un dispositif de rangement, le module d'extension étant en position étendue, le support étant dans la deuxième position et la tablette étant en position alignée sur le support, le deuxième volet de la tablette étant en position rabattue sur le premier volet.
La figure 25 est une vue en perspective représentant de façon partielle un mode de réalisation d'un ensemble comprenant une console, un module d'extension et un dispositif de rangement, le module d'extension étant en position étendue, le support étant dans la deuxième position et la tablette étant en position transversale par rapport au support, le deuxième volet de la tablette étant en position déployée.
La figure 26 est une vue en perspective représentant un mode de réalisation d'un dispositif de rangement, le support étant dans la première position et la tablette étant en position alignée sur le support, le deuxième volet de la tablette étant en position rabattue sur le premier volet.

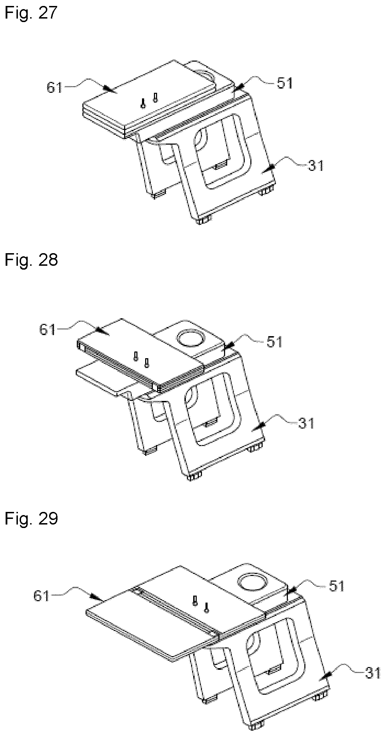

La figure 27 est une vue en perspective représentant un mode de réalisation d'un dispositif de rangement, le support étant dans la deuxième position et la tablette étant en position alignée sur le support, le deuxième volet de la tablette étant en position rabattue sur le premier volet.
La figure 28 est une vue en perspective représentant un mode de réalisation d'un dispositif de rangement, le support étant dans la deuxième position et la tablette étant en position transversale par rapport au support, le deuxième volet de la tablette étant en position rabattue sur le premier volet.
La figure 29 est une vue en perspective représentant un mode de réalisation d'un dispositif de rangement, le support étant dans la deuxième position et la tablette étant en position transversale par rapport au support, le deuxième volet de la tablette étant en position déployée.
La figure 30 est une vue en perspective représentant de façon partielle un mode de réalisation d'un dispositif de rangement, le support étant dans la deuxième position et la tablette étant en position alignée sur le support, le deuxième volet de la tablette étant en position rabattue sur le premier volet.
La figure 31 est une vue en coupe correspondant à la figure 29.
La figure 32 est une vue en coupe représentant de façon partielle un mode de réalisation d'un dispositif de rangement, le support étant dans la première position et la tablette étant en position alignée sur le support, le deuxième volet de la tablette étant en position rabattue sur le premier volet.
La figure 33 est une vue en coupe représentant de façon partielle un mode de réalisation d'un dispositif de rangement, le support étant dans la deuxième position et la tablette étant en position transversale par rapport au support, le deuxième volet de la tablette étant en position déployée.

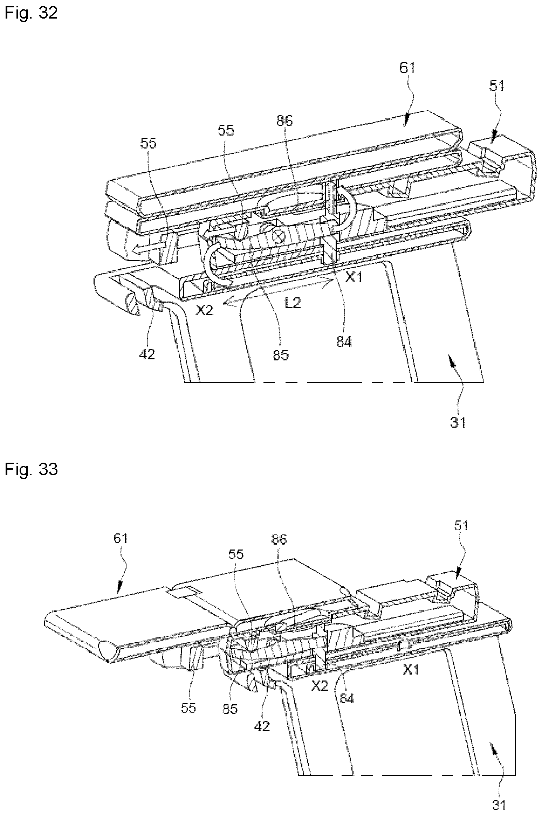

La figure 33 représente un véhicule équipé d'un mode de réalisation d'un ensemble comprenant une console, un module d'extension et un dispositif de rangement, le module d'extension étant en position rangée, le support étant dans la première position et la tablette étant en position alignée sur le support et pliée.

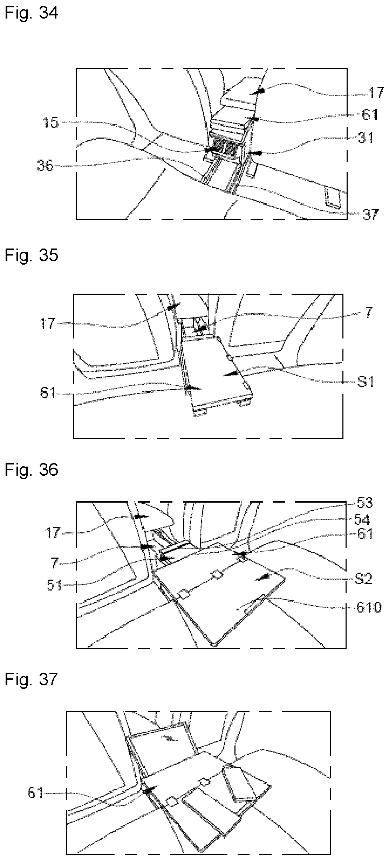

La figure 34 représente un véhicule équipé d'un mode de réalisation d'un ensemble comprenant une console, un module d'extension et un dispositif de rangement, le module d'extension étant en position rangée, le support étant dans la première position et la tablette étant en position alignée sur le support et en configuration pliée.
La figure 35 représente un véhicule équipé d'un mode de réalisation d'un ensemble comprenant une console, un module d'extension et un dispositif de rangement, le module d'extension étant en position étendue, le support étant dans la deuxième position et la tablette étant en position alignée sur le support et en configuration pliée.
La figure 36 représente un véhicule équipé d'un mode de réalisation d'un ensemble comprenant une console, un module d'extension et un dispositif de rangement, le module d'extension étant en position étendue, le support étant dans la deuxième position et la tablette étant en position transversale par rapport au support et en configuration dépliée.
La figure 37 est une vue en perspective correspondant à la figure 35, un objet électronique de type tablette étant maintenu dans une rainure du support et des objets étant positionnés sur la tablette, notamment un téléphone portable de type « smartphone ».

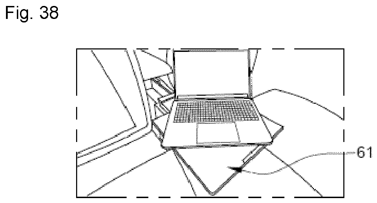

La figure 38 est une vue en perspective correspondant à la figure 35, un objet électronique de type ordinateur portable étant positionné sur la tablette.

L'invention propose une console de rangement, qui sera plus simplement appelée console par la suite, présentant un volume de rangement maximisé pouvant être associée à un dispositif de rangement comprenant notamment une tablette destinée à servir de support pour des objets.

Une telle console est par exemple destinée à être agencée en partie centrale de l'habitacle d'un véhicule, notamment entre les sièges du premier rang. La zone de surface plane horizontale ou tablette est notamment destinée à être utilisée par des passagers assis sur des sièges du deuxième rang.

Par siège ou assise du premier rang d'un véhicule, on entend un siège destiné à être utilisé par un conducteur ou un passager avant. Par siège ou assise du deuxième rang d'un véhicule, on entend un siège destiné à être utilisé par un passager arrière.

La demanderesse a repensé la zone de l'habitacle destinée à être utilisée par des passagers arrière. La demanderesse a réalisé des études et/ou des essais concernant la zone centrale arrière pour offrir une nouvelle zone commune, un espace convivial tout en offrant des rangements optimisés, et de sorte que chaque manipulation des nouvelles fonctionnalités soit aisée, pratique et en accord avec les conditions des passagers arrière.

L'invention propose un dispositif de rangement pour une multitude de fonctionnalités, le dispositif de rangement comprenant une zone de surface plane destinée à servir de support pour des objets en partie centrale à l'emplacement d'une console centrale au premier rang avec une intégration, un effacement possible.

L'invention propose une console munie d'un accoudoir présentant des modifications par rapport à des consoles habituellement utilisées dans l'habitacle d'un véhicule.

L'invention propose une console présentant un nombre accru de compartiments de rangement et un volume global de rangement accru en partie avant de la console. La console comprend notamment un compartiment de rangement de type tiroir destiné aux usagers du premier rang. Une partie du volume de rangement est déplacé sous la partie avant de l'accoudoir par rapport à une console du type de celles habituellement utilisées. Ceci permet de libérer une partie du volume de rangement habituel, remplacé par le tiroir agencé à l'avant de la console. De préférence, un compartiment de rangement de type tiroir peut être prévu en partie arrière inférieure de la console.

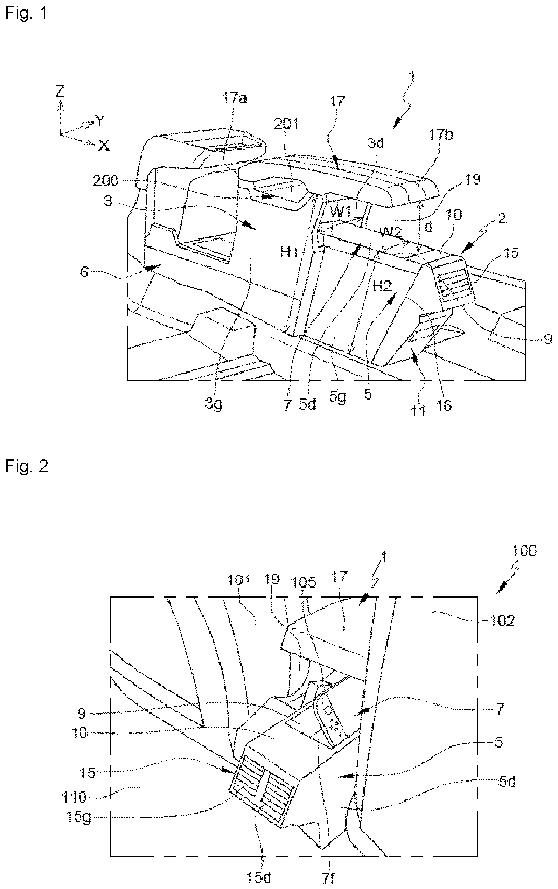

Un mode de réalisation d'un ensemble 1 comprenant une console 2 est décrit ci-après en référence à la figure 1.

La console 2 est par exemple une console centrale.

La console 2 est par exemple destinée à être positionnée à l'emplacement d'une console centrale d'un véhicule, notamment un véhicule automobile. Par console centrale d'un véhicule, on entend une console disposée dans l'habitacle du véhicule sur le plancher du véhicule, entre le siège du conducteur et le siège du passager avant.

Avantageusement, la console 2 comprend au moins un compartiment de rangement intégré. L'au moins un compartiment de rangement est destiné au rangement d'objets divers. Avantageusement, la console 2 peut aussi servir de support pour un accoudoir en vue d'améliorer le confort du conducteur ou d'un passager avant. Avantageusement, la console permet en outre d'assurer une fonction de ventilation ou d'aération de l'habitacle d'un véhicule.

On définit un repère orthonormé direct XYZ, dans lequel l'axe X désigne la direction longitudinale dans laquelle le véhicule se déplace habituellement en ligne droite, et est orienté de l'avant vers l'arrière du véhicule. L'axe Y désigne la direction transversale du véhicule et est orienté du côté gauche vers le côté droit du véhicule. L'axe Z désigne la direction verticale, et est orienté du bas vers le haut, de la partie inférieure vers la partie supérieure du véhicule.

Les termes « avant », « devant » et « arrière », « derrière » sont définis en référence à la direction longitudinale X. Les termes « droite » et « gauche » sont définis en référence à la direction transversale Y. Les termes « inférieur » et « supérieur » sont définis en référence à la direction Z.

La console 2 comprend par exemple une partie avant 3 et une partie arrière 5. La partie arrière 5 est située derrière la partie avant 3 selon la direction longitudinale X. Avantageusement, la partie arrière 5 a été créée, ajoutée pour le deuxième rang par rapport aux consoles habituellement utilisées. La partie arrière 5 est par exemple destinée à être utilisée par des passagers assis au deuxième rang.

La console 2 est par exemple destinée à être fixée sur le plancher d'un véhicule 100, entre le siège 101 du conducteur et le siège 102 du passager avant.

Avantageusement, la partie arrière 5 peut être plus étroite que la partie avant 3. Avantageusement, la partie arrière 5 présente une largeur W2 inférieure à la largeur W1 de la partie avant 3.

A titre d'exemple d'ordre de grandeur de dimensions, la largeur W1 est par exemple comprise entre 165 mm et 170 mm, par exemple de l'ordre de 172 mm, et la largeur W2 est par exemple comprise entre 110 mm et 120 mm, par exemple de l'ordre de 113 mm.

Par largeur de la console, on entend la dimension de la console selon la direction transversale Y.

Avantageusement, la partie arrière 5 peut présenter une hauteur H2 inférieure à la hauteur H1 de la partie avant 3.

A titre d'exemple d'ordre de grandeur de dimensions, la hauteur H1 est par exemple comprise entre 360 mm et 370 mm, par exemple de l'ordre de 364 mm, et la hauteur H2 est par exemple comprise entre 250 mm et 260 mm, par exemple de l'ordre de 256 mm.

Par hauteur de la console, on entend la dimension de la console selon la direction Z.

La partie avant 3 de la console 2 comprend par exemple une paroi latérale avant gauche 3g et une paroi latérale avant droite 3d faisant face à la paroi latérale gauche 3g. La partie arrière 5 de la console 2 comprend par exemple une paroi latérale arrière gauche 5g et une paroi latérale arrière droite 5d faisant face à la paroi latérale arrière gauche 5g.

La paroi latérale avant gauche 3g et la paroi latérale avant droite 3d sont séparées selon la direction transversale Y d'une distance correspondant à la largeur W1 de la partie avant 3. La paroi latérale arrière gauche 5g et la paroi latérale arrière droite 5d sont séparées selon la direction transversale Y d'une distance correspondant à la largeur W2 de la partie arrière 5.

La partie arrière 5 plus étroite que la partie avant 3 permet de libérer un espace de chaque côté gauche et droit de la console 2, de part et d'autre des parois latérales arrière gauche 5g et droite 5d, pour l'agencement d'un module d'extension. Cela sera décrit ci-après.

La console 2 peut comprendre en outre une partie supplémentaire 6 située devant la partie avant 3. La partie supplémentaire 6 est par exemple destinée à être située sous une planche de bord d'un véhicule.

Avantageusement, la partie arrière 5 est configurée pour recevoir, coopérer ou s'engager avec un module d'extension apte à entourer au moins partiellement la partie arrière 5 de la console dans la position rangée du module d'extension. Cela sera décrit ci-après.

La partie arrière 5 de largeur plus étroite de la console 2 est destinée à permettre le coulissement d'une tourelle ou corps d'un module d'extension autour de cette partie arrière 5 plus étroite de la console 2.

La console 2 peut comprendre au moins un compartiment de rangement, notamment au moins un bac de rangement et/ou au moins un tiroir.

Avantageusement, la partie arrière 5 peut comprendre au moins un compartiment de rangement, notamment au moins un bac de rangement. Avantageusement, la partie arrière 5 de la console 2 peut comprendre un bac de rangement 7. Le bac ou compartiment de rangement 7 est destiné au rangement ou au stockage d'objets divers 105. Le bac ou compartiment de rangement 7 est destiné à être utilisé par les passagers du deuxième rang.

Le bac de rangement 7 comprend par exemple une ouverture supérieure 9. L'ouverture supérieure 9 peut être laissée libre, ce qui permet d'accéder facilement à l'intérieur du bac de rangement 7 pour y placer des objets ou pour retirer des objets du bac.

De préférence, le bac de rangement 7 présente une longueur assez élevée selon la direction longitudinale X. Par longueur du bac de rangement, on entend sa dimension selon la direction longitudinale X.

Le bac de rangement 7 est par exemple délimité latéralement par la paroi latérale arrière gauche 5g et la paroi latérale arrière droite 5d.

Avantageusement, le bac de rangement 7 est positionné en position supérieure de la partie arrière 5 de la console 2. Selon le mode de réalisation, il s'étend selon la direction Z sur une portion supérieure seulement de la hauteur H2 de la partie arrière 5 de la console. Le bac de rangement 7 est par exemple délimité selon la direction Z par un fond 7f. Il en résulte qu'un autre compartiment de rangement peut ainsi être prévu dans la partie arrière 5 de la console 2, sous le bac de rangement 7.

Avantageusement, la partie arrière 5 de la console 2 peut comprendre une paroi supérieure ou zone plane 10 située à l'extrémité supérieure de la partie arrière 5. De préférence, la paroi supérieure 10 peut s'étendre de préférence à l'extrémité arrière de la partie arrière 5 de la console 2, du bord supérieur de la paroi latérale arrière gauche 5g au bord supérieur de la paroi latérale arrière droite 5d, sur une portion arrière de la longueur de la partie arrière 5. Un autre emplacement pourrait être prévu pour cette paroi supérieure 10. La paroi supérieure 10 peut présenter une forme rectangulaire. D'autres formes pourront être prévues pour la paroi supérieure 10.

La paroi supérieure 10 est par exemple destinée à recevoir des objets divers, notamment un récipient. La paroi supérieure 10 est par exemple destinée à servir de base pour un support de type porte-gobelet.

Avantageusement, la console 2 peut comprendre au moins un tiroir.

La console 2 peut comprendre un premier tiroir 11 apte à coulisser au moins en partie dans une partie inférieure ou partie basse de la console, notamment dans la partie arrière 5 de la console. Le premier tiroir 11 peut être apte à coulisser selon la direction longitudinale X ou sensiblement selon la direction longitudinale X. Le premier tiroir 11 peut comprendre une ouverture supérieure 12. Le premier tiroir 11 peut comprendre un système d'ouverture et de fermeture 13 situé à l'arrière de la console, comprenant un moyen de préhension 13, notamment une poignée.

Le premier tiroir 11 est apte à passer d'une position fermée, dans laquelle l'ouverture 12 est obturée et dans laquelle le compartiment de rangement délimité par le premier tiroir se trouve dans la partie inférieure de la partie arrière 5 de la console, à une position ouverte, dans laquelle l'ouverture 12 est dégagée et dans laquelle le premier tiroir se trouve au moins en partie hors de la partie inférieure de la partie arrière 5 de la console. La position ouverte du tiroir permet de libérer l'ouverture supérieure 12 du tiroir et d'accéder à l'intérieur du tiroir.

Le premier tiroir 11 est par exemple mobile en translation ou sensiblement en translation selon la direction longitudinale X sur une course de l'ordre de 180 mm.

Un avantage d'une console munie d'un tel tiroir réside dans le fait que le tiroir forme un compartiment de rangement indépendant et présente un volume de rangement clos ou fermé lorsque le tiroir est en position fermée. Un avantage d'une console munie d'un tel tiroir réside dans le fait que le volume de rangement du tiroir est facilement accessible.

La console 2 peut comprendre un deuxième tiroir 21 apte à coulisser au moins en partie dans une partie supérieure ou partie haute de la console, notamment dans la partie avant 3 de la console. Le deuxième tiroir 21 peut être apte à coulisser selon la direction longitudinale X ou sensiblement selon la direction longitudinale X. Le deuxième tiroir 21 peut comprendre une ouverture supérieure 22. Le deuxième tiroir 21 peut comprendre un système d'ouverture et de fermeture 23 situé à l'avant de la console, comprenant un moyen de préhension 23, notamment une poignée.

Le deuxième tiroir 21 est apte à passer d'une position fermée, dans laquelle l'ouverture 22 est obturée et dans laquelle le compartiment de rangement délimité par le deuxième tiroir se trouve dans la partie supérieure de la partie avant 3 de la console, à une position ouverte, dans laquelle l'ouverture 22 est dégagée et dans laquelle le deuxième tiroir se trouve au moins en partie hors de la partie supérieure de la partie avant 3 de la console. La position ouverte du tiroir permet de libérer l'ouverture supérieure 22 du tiroir et d'accéder à l'intérieur du tiroir.

Avantageusement, l'ensemble 1 peut comprendre un moyen d'aération 15, notamment disposé sur la face arrière 16 de la console 2.

Par face arrière de la console, on entend la face arrière de la partie arrière 5 de la console.

Le moyen d'aération 15 est par exemple disposé en partie supérieure de la face arrière 16 de la console. Le moyen d'aération 15 est par exemple disposé au-dessus du tiroir 11, notamment au-dessus du moyen de préhension 13, et derrière le bac de rangement 7 de la partie arrière 5 de la console 2.

Le moyen d'aération 15 comprend par exemple au moins un aérateur ou ventilateur, dit aérateur arrière, notamment un aérateur arrière gauche 15g et un aérateur arrière droit 15d. Le moyen d'aération 15 est par exemple destiné à la ventilation directe en zone arrière, notamment pour le deuxième rang. Le moyen d'aération 15 peut être relié à un système de ventilation du véhicule. Avantageusement, l'aérateur arrière 15 est réglable, notamment en ce qui concerne le flux d'air.

Le véhicule 100 peut comprendre un système de ventilation, notamment un système d'air conditionné ou de climatisation principal, dénommé HVAC pour l'acronyme d'origine anglo-saxonne « Heating, Ventilating and Air-Conditioning ». Le système de ventilation est notamment disposé sous la planche de bord.

Le véhicule 100 peut comprendre un tunnel 111, dit tunnel central, situé sur le plancher 110 entre le siège 101 du conducteur et le siège 102 du passager avant. Le tunnel central est par exemple disposé sous la console 2.

Le système de ventilation comprend par exemple des conduits situés sur le tunnel central, notamment destinés à la circulation d'air.

La demanderesse a redéfini le parcours des conduits d'air présents sur le tunnel central par rapport à un système de ventilation habituellement utilisé. La demanderesse a optimisé le parcours des conduits pour optimiser le volume de rangement de la console tout en gardant une bonne aéraulique. Les formes des conduits sont optimisées pour assurer un résultat d'aéraulique élevé tout en minimisant les pertes de charge.

Le système de ventilation du véhicule 100 comprend par exemple des conduits qui partent du système d'air conditionné HVAC, suivent le tunnel et se dirigent sous les sièges avant 101, 102 et sur la face arrière 16 de la console 2. Les conduits d'air rejoignent ensuite l'aérateur arrière 15 de la console centrale 2. Un tel aérateur permet de conférer un niveau de confort thermique élevé pour le deuxième rang.

Avantageusement, la forme et/ou les dimensions de l'aérateur 15 ont été modifiées par rapport à celles d'un aérateur habituellement utilisé. Les dimensions de l'aérateur 15 sont choisies en respectant des contraintes liées notamment au tiroir 11 de la partie arrière 5 de la console 2. Il en résulte qu'un tel aérateur 15 ne perturbe pas le fonctionnement du tiroir 11 et respecte les prestations du confort thermique en termes de débit, orientation et direction.

L'ensemble 1 peut comprendre un accoudoir 17, notamment un accoudoir central, destiné à être agencé au-dessus de la console 2. L'accoudoir 17 est notamment destiné à améliorer le confort du conducteur ou d'un passager avant.

L'accoudoir 17 peut s'étendre selon la direction longitudinale X. De préférence, l'accoudoir 17 est fixe.

De préférence, l'accoudoir 17 comprend un matériau souple pour le confort des usagers.

De préférence, l'accoudoir 17 présente des dimensions élevées. La largeur de l'accoudoir 17, c'est-à-dire sa dimension selon la direction transversale Y, est par exemple égale ou sensiblement égale à la largeur W1 de la partie avant 3 de la console 2. De préférence, la longueur de l'accoudoir 17, c'est-à-dire sa dimension selon la direction longitudinale X, peut être supérieure à la dimension de la partie avant 3 de la console selon la direction longitudinale X. L'accoudoir 17 recouvre par exemple entièrement la surface supérieure de la partie avant 3 de la console, et est éventuellement disposé au moins partiellement au-dessus de la partie arrière 5 de la console. Avantageusement, la portion arrière de l'accoudoir 17 disposée au moins partiellement au-dessus de la partie arrière 5 de la console est à distance des bords supérieurs de la partie arrière 5 selon la direction Z.

Un avantage d'un tel ensemble comprenant un accoudoir s'étendant au-dessus de la partie avant 3 de la console 2 et au moins partiellement au-dessus de la partie arrière 5 de la console 2 réside dans le fait que l'accoudoir 17 présente notamment une surface d'appui élevée, notamment quelle que soit la position des sièges avant 101, 102 du véhicule.

Un avantage d'un ensemble comprenant un accoudoir du type de celui décrit ci-dessus réside dans une conception et une fonctionnalité simple d'un tel accoudoir.

De préférence, l'accoudoir 17 est fixé sur la partie avant 3 de la console 2. L'accoudoir 17 est par exemple maintenu sur le bord avant supérieur et sur le bord arrière supérieur de la partie avant 3 de la console 2. L'extrémité avant 17a de l'accoudoir 17 est par exemple alignée avec le bord avant supérieur de la partie avant 3 de la console, notamment en contact avec ce bord. L'extrémité arrière 17b de l'accoudoir 17 est par exemple située au-dessus du bac de rangement 7 de la partie arrière 5 de la console, avantageusement à distance du bac de rangement 7 selon la direction Z.

L'extrémité arrière 17b de l'accoudoir 17 est par exemple alignée ou sensiblement alignée avec l'extrémité arrière supérieure du bac de rangement 7, notamment alignée ou sensiblement alignée avec l'extrémité avant de la paroi supérieure 10.

Avantageusement, le bac de rangement 7 destiné au deuxième rang se trouve sous l'accoudoir 17.

De préférence, l'extrémité arrière 17b de l'accoudoir 17 est libre.

L'accoudoir 17 permet ainsi de former un couvercle de protection pour des objets disposés à l'intérieur du bac de rangement 7, ce couvercle étant à distance du bac de rangement 7 selon la direction Z.

Habituellement, un accoudoir d'une console centrale est libre sur l'avant. Dans l'invention, c'est la partie arrière de l'accoudoir qui est libre. La console est avancée sous la partie avant de l'accoudoir. Elle supporte ainsi l'accoudoir dans sa partie avant. Ceci permet de créer un espace libre 19 ou une zone libre en partie arrière, sous l'accoudoir.

Avantageusement, l'accoudoir 17 est disposé sur la console 2 de sorte qu'une partie arrière de l'accoudoir 17 se trouve à distance de la partie arrière 5 de la console selon la direction verticale ou sensiblement verticale Z.

On appelle d la distance entre l'accoudoir 17 et la partie arrière 5 de la console 2 selon la direction Z.

Comme cela sera décrit ci-après, l'espace libre 19 entre l'accoudoir 17 et la partie arrière 5 de la console 2, d'épaisseur d, est destiné à servir de logement pour recevoir un support et une tablette d'un dispositif de rangement.

En outre, l'espace libre 19 permet d'accéder au bac de rangement 7. Un utilisateur peut ainsi visualiser et/ou placer et/ou retirer des objets du bac 7, comme cela est par exemple illustré sur la figure 2. Les parois du bac 7 permettent de retenir des objets placés dans le bac.

L'ensemble 1 peut comprendre un moyen de fixation pour fixer l'accoudoir 17 à la partie avant 3 de la console 2.

L'ensemble 1 peut comprendre un premier dispositif de fixation pour fixer l'extrémité avant 17a de l'accoudoir 17 sur le bord avant supérieur de la partie avant 3 de la console 2, et un deuxième dispositif de fixation pour fixer l'extrémité arrière 17b de l'accoudoir 17 sur le bord arrière supérieur de la partie avant 3 de la console 2. Les principaux efforts sont notamment localisés sur la portion avant de l'accoudoir 17 maintenue sur la partie avant 3 de la console. De préférence, les liaisons de l'accoudoir 17 sont renforcées pour rendre l'accoudoir 17 rigide.

Le premier dispositif de fixation comprend par exemple un système de vis/écrou. Le deuxième dispositif de fixation comprend par exemple un système de vis/écrou.

Un avantage d'un moyen de fixation du type de celui décrit ci-dessus pour fixer l'accoudoir 17 à la partie avant 3 de la console 2 réside dans le fait que l'accoudoir 17 peut être fixé de façon amovible ou détachable sur la console 2.

Les vis du premier dispositif de fixation, à l'avant de l'accoudoir 17, sont par exemple accessibles par l'intérieur du deuxième tiroir 21. Les vis du deuxième dispositif de fixation, à l'arrière de l'accoudoir 17, sont par exemple accessibles par l'espace libre 19. Avantageusement, le premier dispositif de fixation et/ou le deuxième dispositif de fixation ne sont pas apparents, non visibles par un utilisateur du véhicule. Il en résulte une qualité perçue élevée d'un tel ensemble comprenant une console.

D'autres moyens de fixations que des systèmes de vis/écrou pourront être utilisés pour fixer l'accoudoir 17 sur la console 2. L'accoudoir 17 pourrait par exemple être fixé par soudure sur la console 2. L'invention propose d'associer à la console 2 et sous l'accoudoir 17 un petit rangement ou logement 200 comprenant un bac 201 créant un espace de dépose d'objets et d'accessoires. Cette zone est située entre les deux pieds de l'accoudoir. Elle est discrète et elle est accessible par les deux passagers avant.

L'invention propose d'associer à une console du type de celle décrite ci-dessus un dispositif de rangement 50, comprenant un module d'extension 30 coulissant arrière. Avantageusement, le dispositif de rangement 50 peut comprendre en outre un support ou chariot 51 et/ou une tablette 61 destinée à être utilisée de façon partagée par des passagers arrière d'un véhicule.

Le support 51 et/ou la tablette 61 sont notamment destinés à augmenter la course de translation (ou longueur de coulissement) et à augmenter la surface de réception d'objets.

Une console centrale 2 du type de celle décrite en relation avec les figures 1 et 2 est particulièrement avantageuse grâce à la géométrie et aux dimensions de la partie arrière 5 de la console. L'optimisation de l'accoudoir 17 et l'espace libre 19 ménagé entre l'accoudoir 17 et la partie arrière 5 de la console permettent d'associer à la console 2 ou de co-intégrer avec la console 2 un module d'extension arrière de la console et éventuellement un dispositif de rangement.

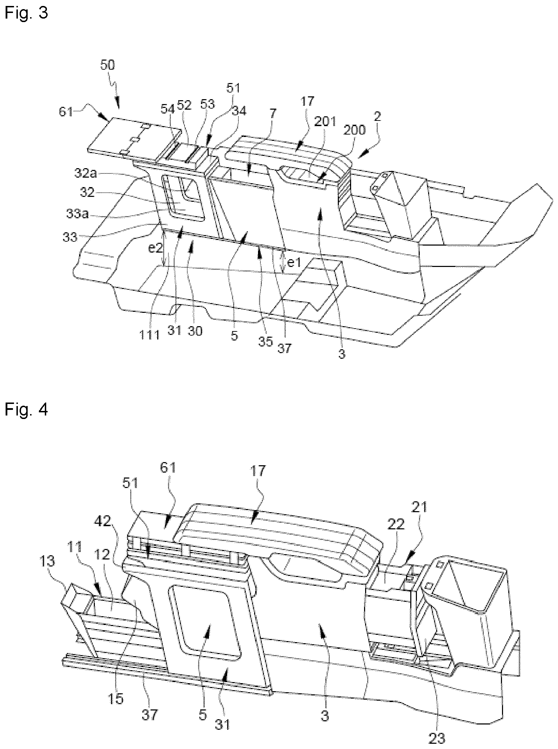

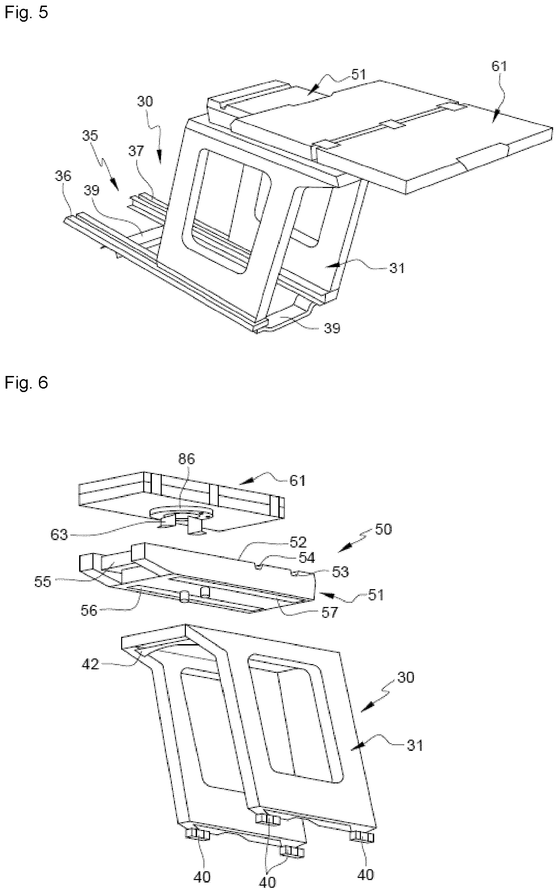

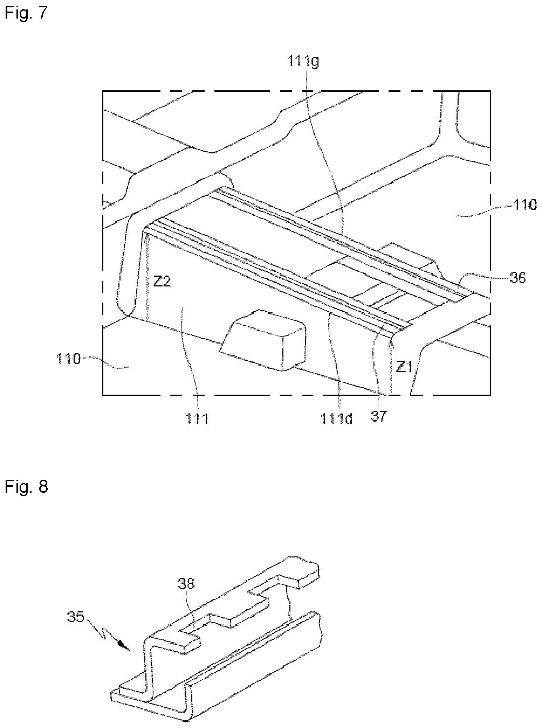

Un exemple d'un ensemble 1 équipé d'un mode de réalisation d'un module d'extension 30 pour une console est décrit ci-après en référence aux figures 3 et 4 et aux figures 5 à 10.

Un tel module d'extension éventuellement associé à un tel dispositif de rangement permet de conserver la fonctionnalité aérateur de la console 2 avec laquelle le module d'extension est associé.

Un tel module d'extension permet de conserver un aérateur 15 en face arrière de la console.

Entre les deux rangements bac de rangement 7 et tiroir 11, nous avons conservé l'aérateur réglable 15 et nous avons aussi la possibilité d'ajouter ou de conserver des connectiques et connexions.

L'invention permet de conserver un aérateur 15 (sur le tiroir arrière 11).

Un ensemble 1 comprenant une console 2 du type de celui décrit ci-dessus permet d'intégrer une nouvelle console arrière indépendante ou un module d'extension.

La console 2 est par exemple une console centrale destinée à être disposée dans un véhicule automobile 100.

Le module d'extension 30 comprend notamment un corps 31 ou partie structurelle ou structure, comprenant au moins une paroi latérale.

Le corps 31 du module d'extension 30 est apte à coulisser selon une direction longitudinale ou sensiblement longitudinale (X) entre une position rangée dans laquelle le corps 31 du module d'extension 30 entoure au moins partiellement une console 2 et une position étendue dans laquelle le corps du module d'extension s'étend derrière la console 2.

Le module d'extension 30 présente par exemple la forme d'une tourelle.

De préférence, le corps 31 du module d'extension 30 peut comprendre une première paroi latérale 32, ou support latéral gauche, et une deuxième paroi latérale 33, ou support latéral droit. Il en résulte une stabilité élevée d'un tel module d'extension 30. La première paroi latérale 32 est notamment opposée à la deuxième paroi latérale 33.

Le corps 31 du module d'extension 30 peut comprendre en outre une paroi supérieure 34, ou support ou plateau supérieur, reliant notamment les bords supérieurs de la première paroi latérale et de la deuxième paroi latérale. La paroi supérieure 34 peut servir de support pour recevoir des objets.

La première paroi latérale 32, la deuxième paroi latérale 33 et la paroi supérieure 34 comprennent par exemple au moins un matériau métallique ou un alliage d'au moins un matériau métallique. Le corps 31 du module d'extension 30 est par exemple en acier. Le corps 31 du module d'extension 30 se présente par exemple sous la forme d'un carénage intégral.

Avantageusement, l'au moins une paroi latérale 32, 33 peut être ajourée. La paroi supérieure 34 peut être ajourée. Il en résulte un allègement du corps 31 du module d'extension 30.

La première paroi latérale 32 comprend par exemple une ouverture 32a, notamment disposée au centre ou sensiblement au centre de la première paroi latérale 32. La deuxième paroi latérale 33 comprend par exemple une ouverture 33a, notamment disposée au centre ou sensiblement au centre de la deuxième paroi latérale 33. La paroi supérieure 34 peut comprendre au moins une ouverture, notamment deux ouvertures 34a, 34b.

Un tel module d'extension dont le corps 31 est muni d'ouvertures centrales de chaque côté latéral permet, lorsque le module d'extension est déployé ou est en position étendue (figure 3), d'éviter de former un mur, de laisser des ouvertures. Ceci permet notamment de laisser passer de la lumière et permet de transférer des objets d'un côté à l'autre de l'habitacle.

Selon une variante, la première paroi latérale 32 et/ou la deuxième paroi latérale 33 peuvent ne pas comprendre d'ouverture.

Le corps 31 du module d'extension 30 est destiné à s'emboiter autour de la partie arrière 5 de la console centrale 2. Le corps 31 du module d'extension 30 est configuré pour ou adapté à s'emboiter autour de la partie arrière 5 de la console centrale 2.

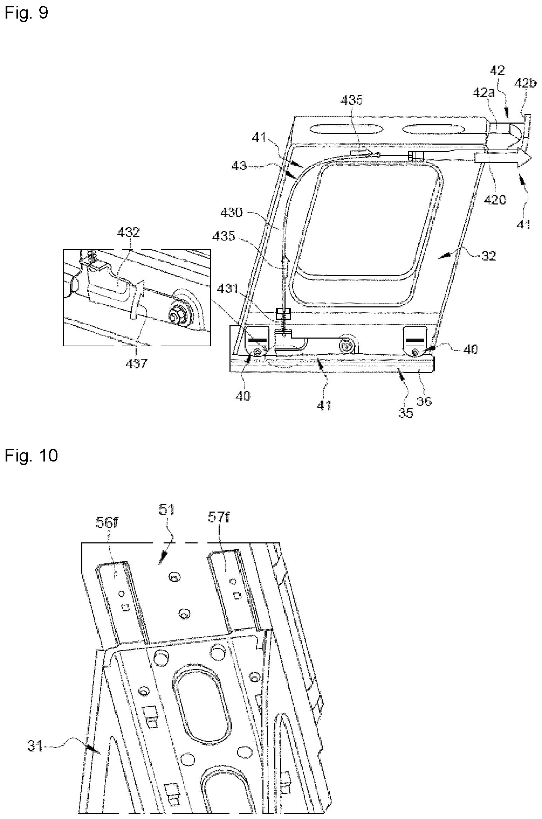

Le corps 31 du module d'extension 30 peut être assemblé de façon non démontable par un utilisateur autour de la console 2. Un mode de réalisation d'un assemblage d'un module d'extension 30 avec une console 2 est représenté sur la figure 9.

On obtient ainsi des consoles « gigognes » dont celle de l'arrière (corps 31 du module d'extension 30) vient se ranger dans le volume de la console principale ou centrale.

Lorsque le module d'extension 30 est en position rangée (figure 4), la surface ou face extérieure ou externe des première et deuxième parois latérales 32, 33 du module d'extension 30 est notamment alignée ou sensiblement alignée avec la surface ou face extérieure ou externe des parois latérales avant gauche 3g et avant droite 3d de la partie avant 3 de la console 2.

Le corps 31 du module d'extension 30 est par exemple apte à coulisser entre deux positions extrêmes, une position avant correspondant à la position rangée (figure 4) et une position arrière correspondant à la position étendue (figure 3) (bi-positions).

Selon une variante, le corps 31 du module d'extension 30 être disposé selon plusieurs ou une pluralité de positions entre les deux positions extrêmes rangée et étendue (multi-positions).

Le corps 31 du module d'extension 30 est par exemple apte à coulisser sur une première longueur de coulissement L1 par rapport à la console principale, entre la position rangée et la position étendue.

La première longueur de coulissement L1 est par exemple de l'ordre de 270 mm.

Dans une alternative de réalisation d'invention, la console pourrait être électrifiée pour le glissement. Un système de motorisation est dans ce cas intégré à la console.

Dans la position étendue, le corps 31 du module d'extension se trouve par exemple à proximité de la banquette arrière ou des sièges du deuxième rang, notamment à l'emplacement d'un pare-close.

Par « pare-close », on entend notamment un élément du plancher d'un véhicule sur lequel est posée la banquette arrière, cet élément étant notamment en forme d'équerre, par exemple métallique ou en tôle. Le pare-close qui est par exemple destiné à former une limite entre un habitacle et un coffre d'un véhicule.

Pour rendre le corps 31 du module d'extension 30 coulissant, le module d'extension 30 comprend notamment au moins un moyen de liaison 35 autorisant une translation selon l'axe longitudinal X.

L'au moins un moyen de liaison 35 peut comprendre au moins un rail, notamment de type glissière, disposé sur le plancher 110 du véhicule. L'au moins un rail peut être disposé selon la direction longitudinale X ou sensiblement selon la direction longitudinale X.

Le module d'extension 30 comprend par exemple un premier rail glissière 36 et un deuxième rail glissière 37. Le premier rail glissière 36 et le deuxième rail glissière 37 sont notamment parallèles ou sensiblement parallèles entre eux.

Le premier rail glissière 36 et le deuxième rail glissière 37 peuvent être des glissières spécifiques liées au tunnel 111 et en adéquation au tapis recouvrant le plancher 110 du véhicule.

Le premier rail glissière 36 et le deuxième rail glissière 37 sont par exemple disposés sur le tunnel 111, respectivement à l'emplacement du bord longitudinal gauche 111g et du bord longitudinal droit 111d du tunnel 111.

Le premier rail glissière 36 présente par exemple une section profilée. Le deuxième rail glissière 37 présente par exemple une section profilée. Le premier rail glissière 36 et le deuxième rail glissière 37 sont par exemple en aluminium, et sont notamment extrudés.

Le module d'extension 30 comprend par exemple des supports de fixation 39 pour fixer les premier et deuxième rails glissières 36, 37 au tunnel 111.

Les supports de fixation 39 sont par exemple en tôle.

Le tapis plancher 110 du véhicule 100 présente notamment des modifications par rapport à un tapis habituellement utilisé. Des modifications du formage du tapis 110 sont réalisées pour recevoir le module d'extension 30.

Le tapis recouvrant le plancher 110 se trouve par exemple à l'extrémité arrière du tunnel 111 à un niveau Z2 supérieur selon l'axe Z par rapport au niveau Z1 du tapis à l'extrémité avant du tunnel 111.

Le tunnel 111 présente notamment une épaisseur croissante de son extrémité avant à son extrémité arrière.

Les découpes destinées à servir de logement pour les premier et deuxième rails 36, 37 sont par exemple réalisées dans le moule directement avec une découpeuse ou par reprise de jet d'eau lors du formage du tapis.

La dimension de l'au moins un rail 36, 37 dans la direction longitudinale sera notamment choisie en fonction de l'emplacement du pare-close dans le véhicule.

Le module d'extension 30 peut comprendre au moins un patin 40 et/ou au moins un roulement de guidage, notamment destiné s'insérer dans le profilé de l'au moins un rail glissière 36, 37. Il en résulte une stabilité élevée du corps 31 du module d'extension 30 sur les premier et deuxième rails glissières 36, 37, notamment grâce aux patins et/ou aux roulements de guidage.

Un patin et/ou au moins un roulement de guidage 40 peut être disposé à l'extrémité avant du bord inférieur de la première paroi latérale 32 du corps 31 du module d'extension 30. Un patin et/ou au moins un roulement de guidage 40 peut être disposé à l'extrémité arrière du bord inférieur de la première paroi latérale 32 du corps 31 du module d'extension 30. Un patin et/ou au moins un roulement de guidage 40 peut être disposé à l'extrémité avant du bord inférieur de la deuxième paroi latérale 33 du corps 31 du module d'extension 30. Un patin et/ou au moins un roulement de guidage 40 peut être disposé à l'extrémité arrière du bord inférieur de la deuxième paroi latérale 33 du corps 31 du module d'extension 30.

Le roulement de guidage 40 comprend par exemple un galet et/ou un pion et/ou une goupille.

L'au moins un patin et/ou l'au moins un roulement de guidage 40 liés à la première paroi latérale 32 sont notamment destinés à être engagés de façon mobile dans le premier rail 36. L'au moins un patin et/ou l'au moins un roulement de guidage 40 liés à la deuxième paroi latérale 33 sont notamment destinés à être engagés de façon mobile dans le deuxième rail 37.

Le premier rail 36 et/ou le deuxième 37 comprend au moins une encoche ou créneau ou cran 38 correspondant à la position rangée du corps 31 du module d'extension 30, cette encoche étant disposée à l'avant du rail, et au moins une encoche ou créneau 38 correspondant à la position étendue du corps 31 du module d'extension 30, cette encoche étant disposée à l'arrière du rail.

Le premier rail 36 et/ou le deuxième 37 peuvent comprendre une pluralité de créneaux ou encoches ou crans 38 régulièrement espacées les uns des autres, notamment avec interposition de dents. Le corps 31 du module d'extension peut ainsi être positionné, éventuellement de façon verrouillée, à une pluralité de positions différentes le long de l'au moins un rail 36, 37 (multi-positions). Le nombre de crans pourra être choisi en fonction du nombre de positions souhaitées pour le corps 31 du module d'extension 30.

Le module d'extension 30 peut comprendre un premier moyen de verrouillage et de déverrouillage 41 du corps 31 du module d'extension sur l'au moins un rail 36, 37.

Le premier moyen de verrouillage 41 est destiné à éviter tout mouvement non souhaité et/ou non contrôlé du corps 31 du module d'extension 30, notamment en cas d'un éventuel choc sur le véhicule, par exemple en cas de choc frontal ou latéral. Le premier moyen de verrouillage 41 permet de sécuriser chaque position du module d'extension 30.

Le module d'extension 30 peut comprendre au moins un loquet ou une patte ou un doigt ou un pion ou pion de verrouillage configuré pour s'engager dans les créneaux 38 de l'au moins un rail 36, 37. Ceci permet de déplacer et de maintenir de façon verrouillée le corps 31 du module d'extension 30 en le positionnant sélectivement le long de l'au moins un rail 36, 37, à différentes positions correspondant aux encoches 38.

Le premier moyen de verrouillage 41 peut comprendre au moins un verrou formé par une patte ou un doigt destiné à coopérer avec les encoches 38 ou à s'insérer dans les encoches 38 de l'au moins un rail 36, 37, notamment par liaison pivot. L'au moins un doigt est par exemple situé au bord inférieur d'au moins une des parois latérales 32, 33 du corps 31 du module d'extension 30. Le module d'extension 30 peut comprendre un verrou sur une seule des parois latérales 32, 33 du corps 31. Avantageusement, le module d'extension 30 peut comprendre un verrou sur la première paroi latérale 32 et un verrou sur la deuxième paroi latérale 33. Il en résulte une stabilité accrue du module d'extension 30.

Le verrouillage du corps 31 du module d'extension 30 sur l'au moins un rail 36, 37 est réalisé grâce à l'ancrage de l'au moins une patte ou doigt dans une encoche 38 du rail 36, 37, notamment par liaison pivot.

Le moyen de liaison 35 et éventuellement le moyen de verrouillage 41 sont destinés à assurer le maintien mécanique entre le corps 31 du module d'extension 30 et l'au moins un rail 36, 37.

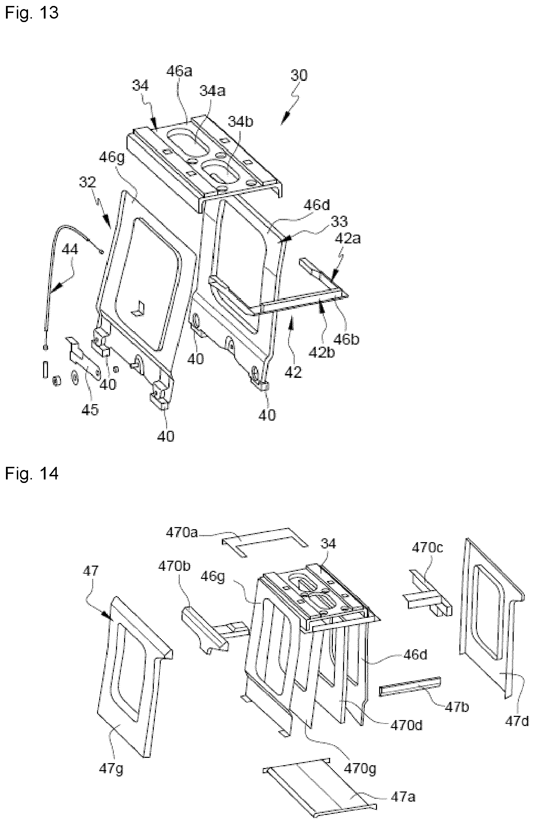

Le module d'extension 30 peut comprendre un moyen de freinage ou système de frein comprenant notamment une biellette de frein 45 (figure 13).

Le module d'extension 30 peut comprendre un système de frein du côté droit et/ou du côté gauche du corps 31. De préférence, un système de frein, comprenant notamment une biellette de frein 45, est associé à la première paroi latérale 32, et un système de frein, comprenant notamment une biellette de frein 45, est associé à la deuxième paroi latérale 33. L'au moins un système de frein est destiné à empêcher le corps 31 du module d'extension 30 de dépasser la limite de l'au moins un rail 36, 37.

Le premier moyen de verrouillage 41 du corps 31 du module d'extension 30 avec l'au moins un rail glissière 36, 37 pourrait être formé d'une autre manière, par exemple au moyen d'un frein mécanique ou électrique.

Un mode de réalisation d'un moyen de verrouillage et de déverrouillage 41 d'un module d'extension est décrit plus en détails ci-après en référence à la figure 9.

Le premier moyen de verrouillage et de déverrouillage 41 peut comprendre un moyen d'activation 42, comprenant une palette 42a. Le moyen d'activation peut comprendre un moyen de préhension, comprenant notamment une poignée 42b. Le moyen de préhension 42b est notamment lié à la palette 42a. Le moyen d'activation est destiné à déclencher le mouvement de coulissement du corps 31 du module d'extension 30. La poignée 42b est destinée à servir de moyen de préhension pour entraîner un mouvement de translation ou sensiblement de translation de la palette 42a.

La poignée 42b est par exemple positionnée à l'arrière du corps 31 du module d'extension 30.

En position rangée du corps 31 du module d'extension 30, la poignée 42b est notamment positionnée de façon sensiblement alignée avec l'aérateur 15 selon l'axe longitudinal X. Dans le cas où le module d'extension 30 est associé à un support 51 d'un dispositif de rangement, la poignée 42b est notamment positionnée sous le support 51 en position rangée du corps 31 du module d'extension 30.

La palette 42a est notamment liée au corps 31 du module d'extension 30.

Le moyen d'activation 42 est notamment mobile en translation ou sensiblement en translation selon l'axe longitudinal X.

Le moyen d'activation 42 du module d'extension 30 est par exemple apte à coulisser entre une première position de repos et une deuxième position d'activation, par exemple sur une longueur de coulissement de l'ordre de 7 à 8 mm. Un tel déplacement du moyen d'activation 42 par rapport au corps 31 est représenté par une flèche 420 sur la figure 9. Dans la deuxième position, la palette 42a peut se trouver au moins en partie à l'arrière du corps 31. Dans la position de repos, la palette 42a peut se trouver au moins en partie dans un logement 422 prévu dans le corps 31.

La poignée 42b est du module d'extension 30 est notamment destinée à être en contact avec une assise du deuxième rang, notamment le siège central, lorsque le corps 31 du module d'extension 30 est en position étendue.

Le premier moyen de verrouillage et de déverrouillage 41 peut comprendre un bouton, notamment de type bouton poussoir. Un appui sur le bouton, notamment via le moyen d'activation 42, permet de libérer déplacement du corps 31 du module d'extension.

Le premier moyen de verrouillage et de déverrouillage 41 peut comprendre en outre un système de câble ou de liaison 43, comprenant notamment un câble ou câble de liaison 430 (fig. 9). Le câble de liaison 44 réalise une liaison mécanique entre le moyen d'activation 42 et les moyens de freinage 45. Le système de câble permet de libérer les moyens de freinage 45 et le pion ou doigt de verrouillage du module d'extension 30 sur l'au moins un rail 36, 37.

Le moyen d'activation 42, notamment la palette 42a, est destiné à agir sur le système de liaison 43, notamment le câble de liaison 430, qui permet de déverrouiller les moyens de freinage 45 du module d'extension et notamment de libérer le pion de verrouillage du corps 31 sur l'au moins un rail 36, 37. L'action de traction du moyen d'activation 42 sur le câble de liaison 430 est représentée par des flèches 435.

Le système de câble ou de liaison 43 peut comprendre en outre un moyen de rappel élastique 431, notamment un ressort, et un moyen d'actionnement, notamment une manette 432. L'action de traction du moyen d'activation 42 sur le câble de liaison 430 permet d'entraîner un déplacement de la manette 432 vers le haut, notamment par traction, ce qui permet de libérer le galet ou patin ou roulement de guidage 40 ancré dans le rail du moyen de liaison 35 notamment à l'emplacement d'une encoche 38, et de modifier la position du corps 31 sur le rail, notamment déplacer le corps 31 vers une autre position correspondant à une autre encoche 38.

L'actionnement de la manette 432 entraîne un mouvement de rotation ou pivotement de la patte ou pion de verrouillage du corps 31 (flèche 437), ce qui permet de libérer le galet ou patin ou roulement de guidage 40, notamment les deux galets ou patins ou roulements de guidage 40 de la paroi latérale correspondante 32, 33 du corps 31.

Les freins 45 viennent ensuite retomber dans les encoches 38 de la nouvelle position.

En déplaçant la palette 42, notamment par traction, de la première position de repos à la deuxième position d'activation, le système de liaison 43 déverrouille les freins 45 par rotation ou pivotement de l'au moins une patte ou doigt dans l'encoche correspondante du rail 36, 37.

Un système de câble ou de liaison 43 peut être prévu pour la première paroi latérale 32 et pour la deuxième paroi latérale 33 du corps 31 ou un système de câble ou de liaison 43 commun peut être prévu pour les deux parois latérales 32, 33.

Le corps 31 du module d'extension 30 comprend par exemple des éléments structurels 46a, 46b, 46g, 46d et des pièces d'habillages 47g, 47d, 470g, 470d, 47a, 470a, 470b, 470c, 47b. Les éléments structurels sont notamment destinés à assurer la rigidité du corps 31. Les habillages intérieurs et les habillages extérieurs sont notamment destinés à assurer une qualité perçue élevée du module d'extension 30.

Les éléments structurels comprennent par exemple un élément structurel 46g de la première paroi latérale 32, un élément structurel 46d de la deuxième paroi latérale 33, un élément structurel 46a de la paroi supérieure 34, un élément structurel 46b du moyen d'activation 42.

Les pièces d'habillages comprennent par exemple une pièce 47g d'habillage extérieur de la première paroi latérale 32, une pièce 47d d'habillage extérieur de la deuxième paroi latérale 33, une pièce 470g d'habillage intérieur de la première paroi latérale 32, une pièce 470d d'habillage intérieur de la deuxième paroi latérale 33, une pièce 47a d'habillage inférieur de la paroi supérieure 34, des pièces 470a, 470b, 470c d'habillage supérieur de la paroi supérieure 34, une pièce 47b d'habillage de la poignée 42b. La pièce 470b est destinée à être liée à la pièce 47g de la première paroi latérale 32. La pièce 470c est destinée à être liée à la pièce 47d de la deuxième paroi latérale 33. La pièce 470c est destinée à être disposée à l'arrière du corps 31 et à être liée aux pièces 470b et 470c.

Les pièces d'habillages sont par exemple en au moins un matériau composite ou plastique, par exemple en polypropylène.

Avantageusement, un dispositif de rangement du type de celui décrit ci-dessus peut comprendre en outre un support 51 et une tablette 61 destinée à être montée sur le support 51.

La tablette 61 est destinée à augmenter la surface de destinée à recevoir des objets par rapport à celle de la paroi supérieure 34 du module d'extension.

Le support 51 sur lequel est monté la tablette 61 permet de déclencher un glissement supplémentaire afin d'obtenir une bonne position de la tablette par rapport aux passagers arrière. Grâce au support 51, la tablette 61 peut se trouver au-dessus de l'assise du deuxième rang, ce qui permet d'obtenir une table centrale.

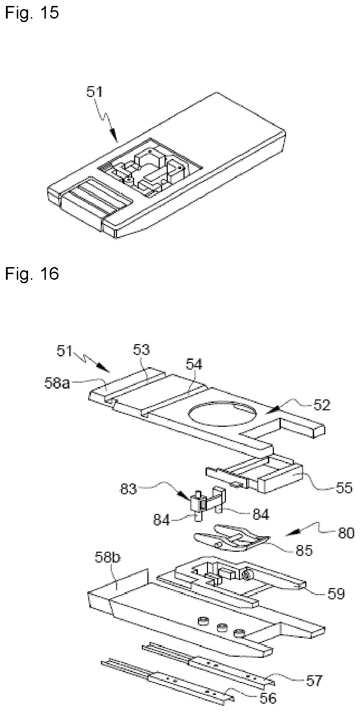

Un mode de réalisation d'un support 51 d'un dispositif de rangement 50 est décrit plus en détails ci-après en référence aux figures 15 à 17.

Le support 51 (ou chariot) est destiné à être monté mobile sur le module d'extension 30, notamment sur la paroi supérieure 34.

Avantageusement, le support 51 peut être apte à coulisser selon la direction longitudinale ou sensiblement longitudinale X entre une première position et une deuxième position. Le support 51 permet d'augmenter la longueur de coulissement ou course de translation du dispositif de rangement 50 par rapport à un dispositif de rangement 50 comprenant un module d'extension 30 sans support 51.

Avantageusement, le support 51 peut comprendre au moins une rainure 53, 54 ou nervure transversale destinée à recevoir un objet électronique, par exemple deux nervures transversales, une première rainure 53 et une deuxième rainure 54. La première rainure 53 est par exemple destinée au maintien d'une console de jeux. La deuxième rainure 54 est par exemple destinée au maintien d'une tablette ou d'un téléphone portable de type « smartphone ».

L'au moins une rainure 53, 54 est située sur la face supérieure 52 du support 51.

Avantageusement, l'au moins une rainure 53, 54 s'étend selon la direction transversale Y.

L'au moins une rainure 53, 54 est destinée à recevoir un ou plusieurs objets électroniques, par exemple des écrans, tablettes numériques ou téléphones portables de type « smartphone ». Grâce au support 51 permettant d'augmenter la longueur de coulissement du dispositif de rangement 50, et à l'au moins une rainure 53, 54, des objets électroniques comprenant des écrans peuvent être maintenus en position d'utilisation à un emplacement proche des passagers arrière, ce qui permet notamment d'accroître le confort de lecture sur de tels objets électroniques pour des passagers.

La face supérieure 52 du support 51 peut éventuellement comprendre au moins une empreinte.

Selon une variante, la portion avant de la face supérieure 52 du support 51 peut être dépourvue de rainure et/ou d'empreinte, autrement dit cette portion peut présenter une surface plane, ce qui permet notamment de proposer de nouvelles interfaces.

La face supérieure 52 du support 51 pourrait être électrifiée ou munie de connexions pour permettre de charger des éléments ou pourrait être utilisée comme source d'énergie électrique.

Le support 51 comprend par exemple un habillage supérieur 58b, un habillage inférieur 58b et un renfort ou structure 59. La structure 59 est par exemple métallique ou en un matériau composite. L'habillage supérieur 58b et/ou l'habillage inférieur 58b sont par exemple en plastique.

Avantageusement, le dispositif de rangement 50 peut comprendre un deuxième moyen de verrouillage et de déverrouillage 55, comprenant notamment une palette 55a et un moyen de préhension, par exemple une poignée 55b. Le deuxième moyen de verrouillage et de déverrouillage est destiné au verrouillage et au déverrouillage du support 51 sur le module d'extension 30, ce qui permet de libérer le support 51 pour permettre son déplacement.

Avantageusement, le deuxième moyen de verrouillage et de déverrouillage comprend une seule commande ou poignée de verrouillage/déverrouillage 55 pour verrouiller et déverrouiller le support 51.

Le dispositif de rangement 50 peut comprendre un deuxième moyen de liaison, notamment de coulissement ou de glissement, comprenant au moins un rail 56, 57 de type glissière. Le deuxième moyen de liaison est destiné à permettre un mouvement de translation ou sensiblement de translation du support 51 selon l'axe longitudinal X.

L'au moins un deuxième moyen de liaison comprend au moins un rail, notamment de type glissière, par exemple un troisième rail 56 et un quatrième rail 57.

D'autres moyens de liaison que des rails de type glissière pourraient être prévus pour permettre le coulissement du support 51 par rapport à la paroi supérieure 34 du module d'extension 30.

L'au moins un rail 56, 57 est par exemple lié au support 51, via des fixations 56f, 57f (figure 10).

Le support 51 est par exemple apte à coulisser sur une première longueur de coulissement L2 par rapport au module d'extension 30.

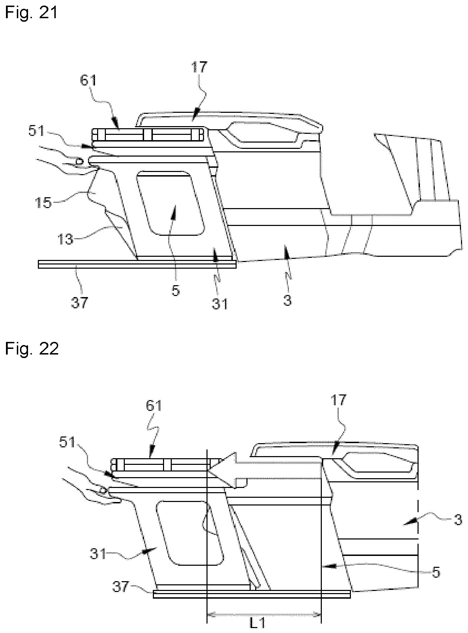

La deuxième longueur de coulissement L2 est par exemple de l'ordre de 103 mm (figure 22).

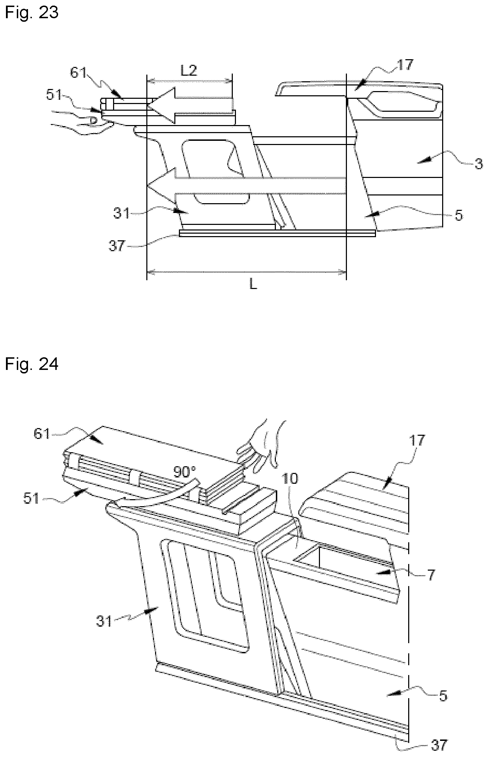

On peut ainsi obtenir une longueur de coulissement totale L de l'ordre de 373 mm (figure 23).

Un mode d'utilisation possible du dispositif de rangement 50 serait de faire coulisser directement le support 51 vers l'arrière en maintenant le corps 31 du module d'extension 30 en position rangée. Ceci permettrait par exemple d'accéder à au moins une portion du support 51 recouvert de la tablette 61 en position alignée, en libérant au moins une partie de l'ensemble du support 51 et de la tablette 61 qui ne serait plus recouverts par l'accoudoir 17. Dans ce cas, le pivotement et le déploiement de la tablette 61 serait difficile car empêché par les dossiers des sièges du premier rang. Toutefois, cela permet d'utiliser la tablette en position rabattue. La surface utilisable correspond à la surface définie par un battant 63 de la tablette 61 (surface S1).

Avantageusement, le support 51 peut être apte à se positionner uniquement selon deux positions (première position X1 et deuxième position X2).

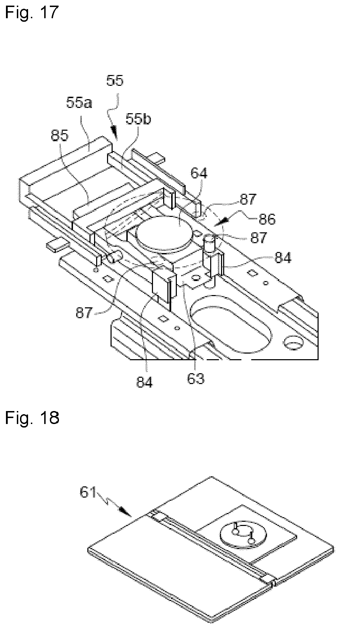

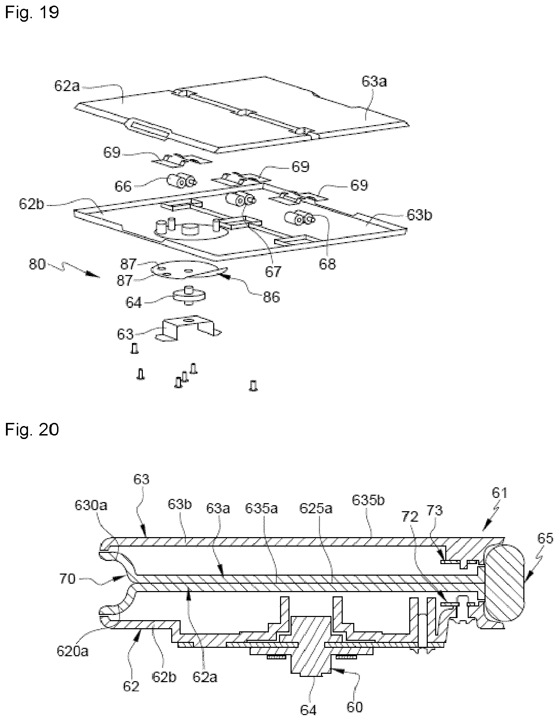

Un mode de réalisation d'une tablette 61 d'un dispositif de rangement 50 est décrit plus en détails ci-après en référence aux figures 18 à 20.

La tablette 61 est destinée à être fixée mobile sur le support 51.

La tablette 61 est par exemple une tablette rotative.

La tablette 61 peut être montée en liaison pivot relativement au support 51.

Avantageusement, la tablette 61 est mobile en rotation autour de la direction verticale ou sensiblement verticale Z. Ceci permet de centrer la tablette par rapport à des passagers gauche/droit.

La tablette 61 est par exemple mobile en rotation autour d'une direction verticale ou sensiblement verticale Z entre une position alignée sur le support et une position transversale par rapport au support.

La tablette 61 est par exemple apte à pivoter d'un angle de l'ordre 90° dans le sens horaire, de la position alignée correspondant à un angle de 0° à la position transversale correspondant à un angle de 90°.

Le dispositif de rangement 50 comprend par exemple un mécanisme de rotation 60 à deux positions ou mécanisme bi-position, comprenant notamment un pivot 64 et un support pivot 63.

Avantageusement, la tablette 61 peut être une tablette pliante. Ceci permet de pouvoir la ranger en réduisant son encombrement.

La tablette 61 peut se déployer pour accroître sa surface destinée à recevoir des objets.

Avantageusement, la tablette 61 peut comprendre un premier volet ou battant 62 destiné à être fixé mobile en rotation autour de la direction verticale ou sensiblement verticale Z sur le support 51 et un deuxième volet ou battant 63 apte à pivoter entre une position rabattue sur le premier volet 62 et une position déployée.

La tablette 61 comprend par exemple deux battants 62, 63 liés par un système de charnières 65.

La forme de tablette 61 est choisie de sorte à faciliter la préhension de la tablette, en particulier pour le deuxième battant 63. Le premier battant 62 et le deuxième battant 63 peuvent comprendre respectivement une première zone de surface courbe 620a et une deuxième zone de surface courbe 630a. La surface courbe 630a du deuxième battant 63 forme une zone de préhension 70 pour le deuxième battant 63.

Le premier battant 62 est par exemple formé d'une première coque 62a et d'une deuxième coque 62b. Le deuxième battant 63 est par exemple formé d'une première coque 63a et d'une deuxième coque 63b. Les premier et deuxième battants 62, 63 sont par exemple formés par moulage par injection.

En position rabattue de la tablette, une première surface plane ou sensiblement plane S1 de la tablette destinée à recevoir des objets est par exemple formée par une surface plane 635b de la deuxième coque 63b du deuxième battant 63.

En position déployée de la tablette, une deuxième surface plane ou sensiblement plane S2 de la tablette destinée à recevoir des objets est par exemple formée par une surface plane 635a de la première coque 63a du deuxième battant 63 et par une surface plane 625a de la première coque 62a du premier battant 62.

A titre d'exemple d'ordre de grandeur de dimensions, la surface S1 est par exemple de l'ordre de 425 cm², la surface S2 est par exemple de l'ordre de 850 cm².

Le déploiement du deuxième volet 63 de la tablette 61 permet d'augmenter la surface destinée à recevoir des objets. Une telle tablette permet par exemple de recevoir un ordinateur portable avec une stabilité élevée.

Le système de charnières 65 comprend par exemple trois charnières 66, 67, 68, par exemple à double axe d'articulations.

L'au moins une charnière 66, 67, 68 est par exemple en un alliage métallique à base de zinc, par exemple en Zamak.

Avantageusement, la forme de l'au moins une charnière 66, 67, 68 est choisie de sorte à obtenir une surface S1 destinée à recevoir des objets et une surface S2 destinée à recevoir des objets les plus planes possibles respectivement en position rabattue et en position déployée du deuxième battant 63 de la tablette 61.

Le système de charnières 65 peut comprendre en outre un support de charnière 69 associé à l'au moins charnière.

Le premier battant 62 peut comprendre un renfort interne 72, par exemple en tôle. Le deuxième battant 63 peut comprendre un renfort interne 73, par exemple en tôle.

Avantageusement, la tablette 61 peut comprendre un revêtement 610 recouvrant la surface plane 635a de la première coque 63a du deuxième battant 63 et/ou la surface plane 625a de la première coque 62a du premier battant 62. Le revêtement 610 permet d'augmenter l'adhérence d'objets sur la surface S2 de la tablette 61 lorsqu'elle est en position déployée. Le revêtement 610 est par exemple en un matériau légèrement alvéolé et/ou en un élastomère, par exemple en caoutchouc.

La surface S1 est par exemple de forme rectangulaire. La surface S2 est par exemple de forme rectangulaire. D'autres formes pourront être choisies pour les surfaces S1 et S2, par exemple une forme circulaire, ovoïde, polygonale, etc.

Selon un exemple de réalisation, la surface S1 et/ou la surface S2 peut ne pas être entièrement plane. La surface S1 et/ou la surface S2 peut comprendre une zone principale plane et au moins une ouverture non traversante ménagée dans cette zone plane destinée à servir de logement de type porte-gobelet.

La surface S1 et/ou la surface S2 de la tablette pourrait être électrifiée et équipée de connexions pour permettre de charger des objets ou pour être utilisée comme source électrique.

L'ensemble formé par le support 51 et la tablette 61, ainsi que la paroi supérieure 34 du corps 31 du module d'extension 30, vient se loger dans le volume libéré entre l'accoudoir 17 et le bac de rangement 7 de la partie arrière 5 de la console principale 2, lorsque le module d'extension est en position rangée, le support est dans la première position et la tablette est en position rabattue (figure 21). L'ensemble formé par la tablette 61 et le support 51 forme dans cette configuration un couvercle de fermeture pour le bac de rangement 7.

De préférence, lorsque le corps du module d'extension 30, le support 51 et la tablette 61 sont rangés, la tablette 61 ne dépasse pas la partie aérateur 15.

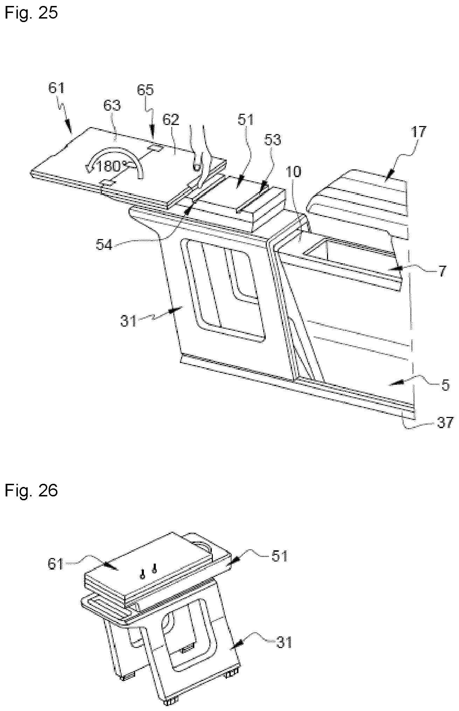

Un mode de fonctionnement d'une tablette 51 est décrit ci-après en référence aux figures 24 et 25.

On part d'une configuration C1 (figure 24) dans laquelle le module d'extension est en position étendue, le support étant dans la deuxième position et la tablette étant en position alignée sur le support, le deuxième volet de la tablette étant en position rabattue sur le premier volet.

On préfère par exemple d'abord positionner le module d'extension 30 dans la position étendue avant de tourner et de déployer la tablette (figures 34 et 35). Dans la configuration illustrée sur la figure 34, le module d'extension 30 a été déplacé vers l'arrière jusqu'au nez d'assise.

On souhaite arriver dans une configuration C2 (figure 25) dans laquelle le module d'extension est en position étendue, le support est dans la deuxième position et la tablette est en position transversale par rapport au support, le deuxième volet de la tablette étant en position déployée.

Pour passer de la configuration C1 à la configuration C2, on pourrait d'abord déplier la tablette en déplaçant le battant 63 de la position rabattue à une position déployée, puis la faire passer de la position alignée à la position transversale. Toutefois, ceci risquerait d'endommager le dispositif de rangement 50 dans le cas où aucune butée n'est prévue sur les charnières 68. L'angle de déploiement du deuxième battant 63 pourrait dépasser 180°, ce qui risquerait d'endommager la tablette. Il est préférable d'abord de pivoter la tablette puis la déplier, il y a ainsi un appui pour que le déploiement s'arrête à 180°.

Pour cela, pour passer de la configuration C1 à la configuration C2, on préfère d'abord pivoter la tablette 61 autour de l'axe Z au moyen du mécanisme de rotation 60, puis déplier la tablette 61 en déployant le deuxième battant 63.

Après la rotation de la tablette (passage de la position alignée à la position transversale), la tablette peut être dépliée (passage du deuxième battant 63 de la position rabattue à la position déployée). Un avantage de ce mode d'utilisation réside dans la fait que le deuxième battant 63 peut se déployer en s'appuyer sur la partie arrière du support 51 (zone de la poignée 55), ce qui permet de protéger la tablette 61 (pas de déploiement d'un angle supérieur à 180° environ).

On pourrait toutefois d'abord déplier la tablette puis la pivoter en veillant à ce que l'angle de déploiement du deuxième battant 63 de la tablette 61 ne dépasse pas un angle de l'ordre de 180°.

On peut utiliser la tablette 61 en position alignée sur le support 51 en déplaçant uniquement le module d'extension 30 vers l'arrière, sans déplacer le support 51 dans la deuxième position X2. Cela dépend de la configuration des sièges avant/arrière, du type de véhicule, des utilisateurs. Un tel dispositif de rangement 50 permet de s'adapter à ces différents paramètres.

Selon un mode préféré d'utilisation, on pivote d'abord la tablette puis éventuellement on déploie le deuxième battant 63 pour augmenter la surface de réception d'objets (passer de la surface S1 à la surface S2).

Quand tous les éléments (module d'extension 30, support 51, tablette 61) du dispositif de rangement 50 sont déployés (figure 3), un avantage d'un tel ensemble 1 réside dans le fait qu'on a toujours accès à l'intérieur du bac de rangement 7.

Le dispositif de rangement 50 peut comprendre un moyen de sécurisation 80 comprenant notamment un système de biellette 85 et/ou un système 83 de doigts d'indexage 84 et/ou une plaque d'indexage 86 notamment munie d'au moins une ouverture 87.

Le moyen de sécurisation 80 est destiné à bloquer le mouvement du support 51 lorsque la tablette 61 est déployée. Ceci permet d'éviter d'endommager le dispositif de rangement 50 et d'augmenter sa durée de vie.

Le système 83 de doigts d'indexage 84 est apte à se déplacer selon un mouvement de translation ou sensiblement de translation selon la direction Z. Le système 83 de doigts d'indexage 84 permet ainsi, en coopération avec la plaque d'indexage 86, d'autoriser ou d'empêcher les actions suivantes :
- action A1 de déplacement du support 51 de la deuxième position X2 vers la première position X1 ;
- action A2 de rotation de la tablette 61 autour de l'axe Z.

Replier et pivoter la tablette est requis pour pouvoir ranger l'ensemble support 51 et tablette 61 dans le logement 19 sous l'accoudoir 17.

Le moyen de sécurisation 80 permet une priorisation des manœuvres et sécurisation des positions du support 51 et de la tablette 61 du dispositif de rangement 50. Le support 51 ne peut plus être translaté vers l'avant (passer de la position X2 à la position X1) si la tablette est en position transversale (figure 33).

Le système 83 de doigts d'indexage 84 permet de réaliser l'une des actions A1, A2 en empêchant la réalisation de l'autre des actions A1, A2. Ceci permet d'éviter un risque d'un double mouvement incompatible du support 51 et de la tablette 61 qui pourrait endommager le dispositif de rangement 50.

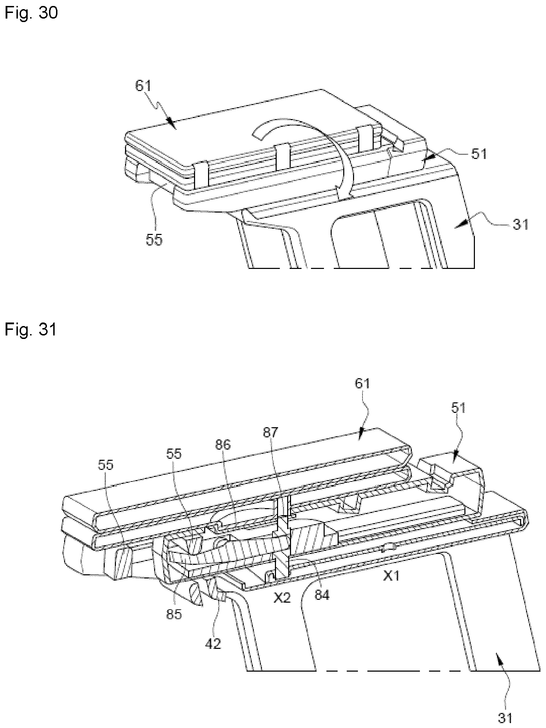

Un mode de fonctionnement d'un moyen de sécurisation 80 est décrit ci-après en référence aux figures 30 à 33.

On part de la configuration des figures 30 et 31 dans laquelle le support est dans la deuxième position X2 et la tablette étant en position alignée sur le support, le deuxième volet de la tablette étant en position rabattue sur le premier volet. Dans ce cas, le déplacement (action A1) du support 51 de la deuxième position X2 vers la première position X1 est autorisé par le moyen de sécurisation 80.

La figure 32 est une vue en coupe représentant de façon partielle un mode de réalisation d'un dispositif de rangement, le support étant dans la première position et la tablette étant en position alignée sur le support, le deuxième volet de la tablette étant en position rabattue sur le premier volet. Lorsque que la tablette 61 est en position alignée, le système 83 de doigts d'indexage 84 peut se déplacer en translation selon l'axe Z, vers le haut, car le doigt d'indexage 84 se trouve à l'emplacement d'une ouverture 86.

L'action de la poignée 55 sur la pente du système de biellette 85 crée une rotation du système de biellette 85, ce qui entraîne la translation selon l'axe Z du système 83 de doigts d'indexage 84.

Lorsque la tablette est dans la position transversale par rapport au support (figure 33), la translation du support 51 (action A1) est impossible. En effet, il n'y a pas de dégagement possible du système 83 de doigts d'indexage 84. Le doigt 84 ne peut pas se translater selon l'axe Z car il ne se trouve pas à l'emplacement d'une ouverture 87 de la plaque d'indexage 86.

Le processus de rangement est notamment possible en commençant par rabattre le deuxième battant 63, par la rotation de la tablette 61, par le glissement du support 51 puis par le glissement du module d'extension 30.

Le mécanisme de rotation 60 de la tablette 61 est par exemple configuré pour être compatible avec l'environnement du support 51 et le moyen de sécurisation 80.

Un mode de réalisation d'un procédé de rangement d'un dispositif de rangement 50 est décrit ci-après en référence aux figures 3 (configuration complètement déployée) et 4 (configuration complètement rangée). Le procédé de rangement commence par la fermeture du deuxième battant 63 (passage de la position déployée à la position rabattue), puis par la rotation de la tablette 51, ensuite par le glissement du support 51 et enfin par le glissement du module d'extension 30.

Le moyen de sécurisation 80 permet le verrouillage de la translation du support 51 lorsque la tablette 61 est pivotée.

De façon optionnelle, on pourrait prévoir un système de verrouillage destiné à empêcher la tablette 61 de se déplier de façon non contrôlée ou non souhaitée par un utilisateur. Un système de verrouillage pourrait être prévu pour éviter tout déploiement non contrôlé du deuxième battant 63, par exemple en cas de choc éventuel sur le véhicule.

Un avantage d'un système du type de celui décrit ci-dessus réside dans :
- la création d'un environnement à bord d'un véhicule plus convivial pour des passagers du deuxième rang ;
- la création d'une zone de convivialité et de réception d'objets ;
- l'ajout de nouvelles fonctionnalités.

Un avantage d'un ensemble 1 du type de celui décrit ci-dessus réside dans un confort accru pour un passager assis sur un siège arrière du véhicule. Un avantage d'un système du type de celui décrit ci-dessus réside dans une console centrale comprenant un nombre et un volume global accru des rangements sur l'avant. On est passé d'un volume de 8 l à 10l dans le cas d'une finition de base et 8,5l à 13 l dans le cas d'une finition plus riche soit un gain supérieur à 20%.

Nous avons gardé le volume de rangement existant sous l'accoudoir qui peut passer d'un rangement de 1,6 l en console et de plus de 3 l en volume ouvert (avec des bords qui retiennent les objets).

Un avantage d'un dispositif de rangement 50 du type de celui décrit ci-dessus réside dans le fait que la capacité de rangement de la console 2 n'est pas impactée par le dispositif de rangement 50, le bac de rangement 7 étant utilisable lorsque la console 2 est équipée du dispositif de rangement 50.

Un avantage d'un dispositif de rangement 50 du type de celui décrit ci-dessus réside dans un confort accru pour des passagers du deuxième rang. Un dispositif de rangement 50 offre de nouvelles fonctionnalités par rapport à une console centrale du type habituellement utilisé, tout en offrant un volume de rangement dans la console 2 très accessible et sécurisé sous l'accoudoir 17 (bac de rangement 7), et éventuellement un compartiment de rangement indépendant (tiroir 11). Un tel ensemble 1 permet d'obtenir un volume de rangement élevé, par exemple de l'ordre de 4 litres, tout en conservant un moyen de ventilation 15.

Un avantage d'un dispositif de rangement 50 du type de celui décrit ci-dessus réside dans un système interactif et multi-fonctionnel qui peut être utilisé dans plusieurs configurations en fonction des attente d'utilisateurs (configuration avancée/reculée du module 30 et/ou du support 51, configuration de surface élevée S2 ou de surface réduite S1 de la tablette 61).

Un avantage d'un tel dispositif de rangement 50 réside dans le fait que la manipulation des différents éléments du dispositif de rangement 50 (module d'extension 30, support 51, tablette 61) est aisée, pratique et confère à des passagers arrière un confort accru.

Un avantage d'un tel dispositif de rangement 50 réside dans le fait qu'il présente un encombrement réduit quelle que soit sa configuration, par exemple lorsque tous les éléments sont déployés, i.e. le module d'extension est en position étendue, le support 51 est dans la deuxième position, le tablette 61 est tournée et dépliée (figure 3), et a fortiori lorsque tous les éléments sont rangés (figure 4).

Un avantage d'un tel dispositif de rangement 50 réside dans le fait qu'il permet d'obtenir une configuration de convivialité notamment lorsque tous les éléments sont déployés. En outre, la tablette 61 ne se trouve pas trop en arrière par rapport aux assises du deuxième rang ce qui permet de garantir un confort élevé d'utilisation pour des passagers. Dans le cas où le deuxième rang est occupé par trois passagers arrière, le module d'extension 30 peut être placé en position rangée. Dans ce cas, l'ensemble 1 présente un encombrement particulièrement réduit car l'ensemble 1 est très compact et occupe un volume global dans l'habitacle peu supérieur à celui occupé par la console 2. Un tel ensemble 1 ne dégrade pas l'environnement central arrière de l'habitacle du véhicule en ce qui concerne le confort pour des passagers arrière.

Un avantage d'un tel dispositif de rangement 50 réside dans le fait qu'il permet de garantir le déploiement des différents éléments de façon sécurisée, en évitant de mauvaises manipulations, notamment grâce au système 83 de doigts d'indexage 84, au moyen de freinage 45 et aux encoches 38, à la poignée 42 du module d'extension 30 cachée par le support 51.

Il a été décrit ci-dessus un système comprenant une console apte à être positionnée à l'emplacement d'une console centrale d'un véhicule. Le système de console pourra bien entendu être positionné à un emplacement du véhicule autre que l'emplacement d'une console centrale, c'est-à-dire sur tout surface rigide délimitant l'intérieur ou l'habitacle d'un véhicule, à tout autre emplacement de l'habitacle du véhicule que la zone située entre le siège du conducteur et le siège du passager avant.

Il a été décrit ci-dessus une console dont le corps comprend un bac de rangement et un compartiment. Le corps de la console pourra comprendre un agencement et un nombre différent de bacs de rangement et/ou de compartiments.

Le premier moyen de verrouillage et de déverrouillage et le deuxième moyen de verrouillage et de déverrouillage pourraient être réalisés d'une autre manière que celle décrite en relation avec les différentes figures, par exemple par un système magnétique ou électro-magnétique.

Il a été décrit ci-dessus un ensemble comprenant une console destinée à être agencée en partie centrale de l'habitacle d'un véhicule, entre les sièges du premier rang, et une tablette destinée à être utilisée par un passager assis sur un siège du deuxième rang. Bien entendu, une telle console associée à un tel dispositif de rangement pourra être agencée à tout autre emplacement d'un véhicule, par exemple à l'emplacement d'un autre rang de sièges.

Il a été décrit ci-dessus un module d'extension pour une console. Un tel module d'extension pourra être associé à un autre dispositif qu'une console.

Un système de console du type de celui décrit ci-dessus pourra être utilisé dans tout type de véhicule motorisé. Un système de console du type de celui décrit ci-dessus pourra être utilisé dans des domaines autres que le domaine des véhicules automobiles, par exemple dans le domaine de l'aviation ou le domaine ferroviaire.

## Revendications

1. Dispositif de rangement (50) pour véhicule automobile, comprenant une console de rangement (2), notamment une console de rangement centrale, **caractérisé en ce qu'**il comprend un module d'extension (30) agencé à l'arrière de la console de rangement (2), monté mobile relativement à la console de rangement (2), notamment mobile en translation, entre une position rangée et une position étendue, et **en ce que** le module d'extension (30) comprend un corps (31) et une tablette (61) agencée sur le corps (31) de manière mobile relativement au corps (31).

2. Dispositif de rangement selon la revendication 1, **caractérisé en ce que** le corps (31) du module d'extension (30) comprend au moins une paroi latérale (32 ; 33) et une paroi supérieure (34), de sorte que dans la position rangée, le corps (31) du module d'extension (30) entoure au moins partiellement la console de rangement (2).

3. Dispositif de rangement (50) selon la revendication précédente, **caractérisé en ce que** la console de rangement (2) comprend un accoudoir (17) fixé sur la partie avant (3) de la console de rangement (2), une partie arrière de l'accoudoir se trouvant à distance de la partie arrière (5) de la console de rangement (2) pour libérer un espace, de sorte que la paroi supérieure (34) du module d'extension (30) est positionnée au moins partiellement sous l'accoudoir dans la position rangée du module d'extension (30) et/ou **en ce que** la console de rangement (2) comprend un bac de rangement (7) positionné en position supérieure de la partie arrière (5) de la console de rangement (2).

4. Dispositif de rangement (50) selon la revendication 2 ou 3, **caractérisé en ce que** la au moins une paroi latérale du module d'extension (30) est positionnée au moins partiellement en vis-à-vis d'une paroi de la console de rangement (2) dans la position rangée du module d'extension (30).

5. Dispositif de rangement (50) selon l'une des revendications précédentes, **caractérisé en ce que** la tablette (61) est pliable, apte à passer d'une configuration pliée à une configuration dépliée, la tablette (61) comprenant notamment un premier volet (62) et un deuxième volet (63) apte à pivoter entre une position rabattue sur le premier volet (62) et une position déployée.

6. Dispositif de rangement (50) selon l'une des revendications précédentes, **caractérisé en ce que** la tablette (61) est montée mobile en rotation autour d'un axe vertical ou sensiblement vertical (Z) relativement au corps (31) du module d'extension (30).

7. Dispositif de rangement (50) selon l'une des revendications précédentes, **caractérisé en ce que** le module d'extension (30) comprend un support (51) mobile en translation relativement au corps (31) du module d'extension (30), et **en ce que** la tablette (61) est montée mobile sur ledit support (51), notamment mobile en rotation.

8. Dispositif de rangement (50) selon l'une des revendications précédentes, **caractérisé en ce qu'**il comprend un premier moyen de verrouillage et de déverrouillage (41), comprenant notamment un système de câble (43) et/ou un premier moyen de préhension comprenant notamment une poignée (42) et/ou un moyen de freinage comprenant notamment une biellette de frein (45), pour verrouiller/déverrouiller la position du module d'extension (30) relativement à la console de rangement (2).

9. Dispositif de rangement (50) selon l'une des revendications précédentes, **caractérisé en ce que** la console de rangement (2) comprend un moyen d'aération (15) disposé à l'extrémité arrière supérieure de la partie arrière (5) de la console de rangement (2).

10. Véhicule (100), notamment véhicule automobile, **caractérisé en ce qu'**il comprend un dispositif de rangement (50) selon l'une des revendications précédentes.

11. Véhicule (100) selon la revendication précédente, **caractérisé en ce que** la console de rangement (2) est une console agencée en partie centrale du véhicule, entre deux sièges avant du véhicule, et **en ce que** le module d'extension (30) est mobile en translation par coulissement par l'intermédiaire d'au moins un rail (36, 37) agencé entre les sièges avant et les sièges arrière du véhicule, à l'arrière de la console de rangement (2).
